# EUROPEAN PATENT APPLICATION

(11) **EP 1 988 747 A2**
(43) Date of publication of application: **05.11.2008**
(21) Application number: 07013849.0
(22) Date of filing: 14.07.2007
(51) Int. Cl.: H05B 3/28

(54) **Method of manufacturing film heater using heat-resistant crystallized glass**

(30) Priority: 03.05.2007 KR 20070042861
(71) Applicant: APRO SYSTEMS CO., LTD, Dongtan-myeon Hwaseong-city Kyonggi do 445-811 (KR)
(72) Inventor: Kang, Byung Soo, Seoul 134-843 (KR)
(74) Representative: Hübner, Gerd

(57) **Abstract**

Disclosed herein is a method of manufacturing a film heater. The film heater is used for domestic or industrial purposes. The method includes a first step of forming a heat-resistant crystallized glass under a heating element to stably absorb and dissipate heat generated by the heating element; a second step of forming a wiring part on the heat-resistant crystallized glass to supply power to the heating element; a third step of forming the heating element in a specific pattern to generate heat when electric power is applied thereto; and a fourth step of forming a ceramic protective layer in an uppermost part of the film heater to protect and insulate patterns of the heating element and the wiring part.

## Description

### BACKGROUND OF THE INVENTION

### 1. Field of the Invention

The present invention relates generally to a method of manufacturing a film heater using heat-resistant crystallized glass, in which the film heater is used for domestic or industrial purposes and can uniformly emit heat, and, more particularly, to a method of manufacturing a film heater using heat-resistant crystallized glass, in which a heating element is formed inside the film heater, so that heat is emitted via a specific pattern formed on a substrate, in which a ceramic protective layer is formed in the uppermost portion of the film heater, so that the patterns of the heating element and a wiring part can be protected and insulated, and in which heat-resistant crystallized glass is employed, so that heat can be stably absorbed and dissipated.

### 2. Description of the Related Art

Conventional film heaters, which have been used for domestic or industrial purposes as described above, have a structure in which a heating element, such as Nichrome wire or stainless steel, is disposed between mica sheets. Heat is generated by applying electricity to the heating element. The heater has problems in that it has a low ratio of heat to applied electric power because heat is transmitted through the mica sheets, which are made of insulating material, and the cross section of the heating element, which emits heat, has a limited size, and in that it is difficult to uniformly and efficiently handle heat.

### SUMMARY OF THE INVENTION

Accordingly, the present invention has been made keeping in mind the above problems occurring in the prior art, and an object of the present invention is to provide a method of manufacturing a film heater using heat-resistant crystallized glass capable of tolerating temperatures as high as 800°C, in which the film heater uses a scheme of applying heat to a heating target via heat-resistant crystallized glass having excellent thermal shock resistance and thermal conductivity in a conduction or radiation manner, in which a wiring part, which supplies power to a heating element, is formed inside the film heater, the heating element is formed under the wiring part, a ceramic protective layer is formed in the uppermost portion of the film heater to protect and insulate the patterns of the heating element and the wiring part, and a heating pattern having a specific shape is formed on the substrate of the heat-resistant crystallized glass to stably absorb and dissipate heat.

In order to accomplish the above object, the present invention provides a method of manufacturing a film heater, the film heater being used for domestic or industrial purposes, the method including-a first step of forming a heat-resistant crystallized glass under a heating element to stably absorb and dissipate heat generated by the heating element; a second step of forming a wiring part on the heat-resistant crystallized glass to supply power to the heating element; a third step of forming the heating element in a specific pattern to generate heat when electric power is applied thereto; and a fourth step of forming a ceramic protective layer in an uppermost part of the film heater to protect and insulate patterns of the heating element and the wiring part.

Preferably, the heat-resistant crystallized glass of the first step is made of ceramic glass-based material, has high far-infrared radiation characteristics, has thermal shock resistance so that the heat-resistant crystallized glass can tolerate a high temperature of 800°C, and transmits heat, generated by the heating element, to a heating target in a conduction or radiation manner.

Preferably, the wiring part of the second step is made of silver Ag.

Preferably, the heating element of the third step is made of ruthenium RuO₂, silver-palladium Ag-Pd, and Carbon NanoTubes (CNTs).

Preferably, the ceramic protective layer of the fourth step is made of amorphous glass SiO₂-A1₂O₃-MgO-RO.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a flowchart of a method of manufacturing a film heater using heat-resistant crystallized glass according to the present invention;
FIG. 2 is a sectional view of the film heater using heat-resistant crystallized glass according to the present invention; and
FIG. 3 is a plan view of the film heater using heat-resistant crystallized glass according to the present invention.

### DESCRIPTION OF THE PREFERRED EMBODIMENTS

Reference now should be made to the drawings, in which the same reference numerals are used throughout the different drawings to designate the same or similar components.

The present invention is described in detail below in conjunction with the accompanying drawings below.

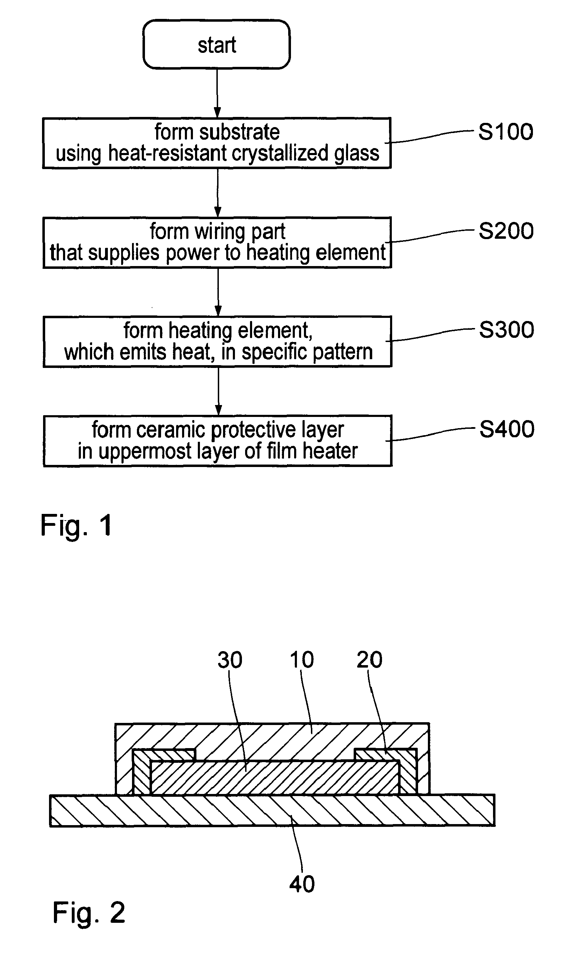

FIG. 1 is a flowchart of a method of manufacturing a film heater using heat-resistant crystallized glass according to the present invention.

As shown in FIG. 1, a heat-resistant crystallized glass 40 is formed under a heating element 30 to stably absorb and dissipate heat generated by the heating element 30 at step S100; a wiring part 20, which supplies power to the heating element 30 and is made of silver Ag, is formed on the heat-resistant crystallized glass 40 at step S200; the heating element 30, which generates heat when electric power is applied thereto, is formed under the wiring part 20 in a specific pattern at step S300; and a ceramic protective layer 10 is formed in the uppermost part of the film heater to protect and insulate the patterns of the heating element 30 and the wiring part 20 at step S400.

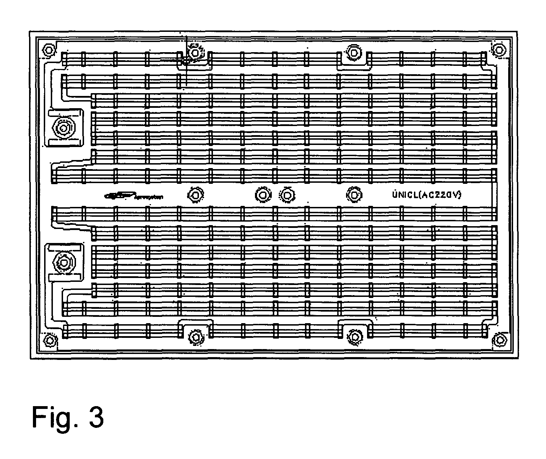

FIG. 2 is a sectional view of the film heater using heat-resistant crystallized glass according to the present invention, and FIG. 3 is a plan view of the film heater using heat-resistant crystallized glass according to the present invention.

As shown in FIGS. 2 and 3, the heat-resistant crystallized glass 40, which is ceramic glass-based material and has high far-infrared radiation characteristics, is formed under the heating element 30, so that the heat-resistant crystallized glass 40 can stably absorb and dissipate heat generated by the heating element 30, and can tolerate temperatures as high as 800°C, thus having excellent thermal shock resistance.

Furthermore, the wiring part 20 is formed over the heat-resistant crystallized glass 40, so that power is supplied to the heating element 30 through the wiring part 20, and the plate-shaped heating element 30 is placed under the wiring part 20, so that heat is emitted through a substrate in a specific pattern.

Meanwhile, the ceramic protective layer 10, which is located in the uppermost part of the film heater, can protect and insulate the patterns of the heating element 30 and the wiring part 20.

Since the wiring part 20 of the second step is made of silver Ag having low hardness, the width of the wiring part can be minimized in a portion in which it is difficult to form a heating pattern, current load can be minimized at high temperature, and the wiring part 20 can be brought into tight contact with terminals due to the low hardness of silver, thereby allowing current to flow without hindrance.

Furthermore, since the heating element 30 of the third step is formed to include ruthenium RuO₂, silver-palladium Ag-Pd, and Carbon NanoTubes (CNTs), oxidation is low at a high temperature of 850°C, and thus the manufacturing cost is low, and the heating element 30 has high current density at a high temperature of 550°C, so that the heating element 30 has characteristics in which oxidation does not easily occur and resistance characteristics are not changed.

The ceramic protective layer 10 of the fourth step is made to include amorphous glass SiO₂-A1₂O₃-MgO-RO, which can be used in a high-temperature and clean environment because it does not emit particles or gas at a high temperature of 550°C, to which unnecessary foreign material does not stick because it has a very dense and smooth surface, which is easy to clean, and which is advantageous in insulation resistance or withstanding voltage because it has excellent insulation characteristics.

As described above, the present invention provides a method of manufacturing a film heater, which is simple, and which provides the film heater, in which heat-resistant crystallized glass is included in the film heater, so that heat, emitted by the heating element, can be stably absorbed and dissipated and the film heater has excellent thermal shock resistance, thus enabling it to tolerate a high temperature of 800°C, and in which a ceramic protective layer is formed, so that the patterns of the heating element and a wiring part can be protected and insulated, with the result that heat, emitted by the heating element, can be efficiently transmitted to a heating target in a conduction or radiation manner.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of manufacturing a film heater, the film heater being used for domestic or industrial purposes, the method comprising:
a first step of forming a heat-resistant crystallized glass under a heating element to stably absorb and dissipate heat generated by the heating element;
a second step of forming a wiring part over the heat-resistant crystallized glass to supply power to the heating element;
a third step of forming the heating element in a specific pattern to generate heat when electric power is applied thereto; and
a fourth step of forming a ceramic protective layer in an uppermost part of the film heater to protect and insulate patterns of the heating element and the wiring part.

2. The method as set forth in claim 1, wherein the heat-resistant crystallized glass of the first step is made of ceramic glass-based material, has high far-infrared radiation characteristics, has thermal shock resistance so that the heat-resistant crystallized glass can tolerate a high temperature of 800°C, and transmits heat, generated by the heating element, to a heating target in a conduction or radiation manner.

3. The method as set forth in claim 1, wherein the wiring part of the second step is made of silver Ag.

4. The method as set forth in claim 1, wherein the heating element of the third step is made of ruthenium RuO₂, silver-palladium Ag-Pd, and Carbon NanoTubes (CNTs).

5. The method as set forth in claim 1, wherein the ceramic protective layer of the fourth step is made of amorphous glass SiO₂-A1₂O₃-MgO-RO.
